(19) Europäisches Patentamt
European Patent Office
Office européen des brevets

(11) **EP 3 296 834 B1**

(12) **FASCICULE DE BREVET EUROPEEN**

(45) Date de publication et mention
de la délivrance du brevet:
**07.08.2024 Bulletin 2024/32**

(21) Numéro de dépôt: **17191277.7**

(22) Date de dépôt: **15.09.2017**

(51) Classification Internationale des Brevets (IPC):
**G06F 1/12** *(2006.01)* **G06F 1/14** *(2006.01)*
**H04J 3/06** *(2006.01)*

(52) Classification Coopérative des Brevets (CPC):
**G06F 1/12; G06F 1/14**

(54) **PROCÉDÉ DE SYNCHRONISATION D'UN SYSTÈME PAR UTILISATION D'UN TEMPS DE VALIDITÉ POUR CHAQUE SIGNAL DE SORTIE**

VERFAHREN ZUR SYNCHRONISIERUNG EINES SYSTEMS DURCH VERWENDUNG EINER GELTUNGSDAUER FÜR JEDES AUSGANGSSIGNAL

METHOD FOR SYNCHRONIZING A SYSTEM BY USING A VALIDITY TIME FOR EACH OUTPUT SIGNAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.09.2016 FR 1658637**

(43) Date de publication de la demande:
**21.03.2018 Bulletin 2018/12**

(73) Titulaire: **ALSTOM Holdings**
**93400 Saint-Ouen-sur-Seine (FR)**

(72) Inventeur: **ANTONIO, Raphael**
**69008 LYON (FR)**

(74) Mandataire: **Lavoix**
**2, place d'Estienne d'Orves**
**75441 Paris Cedex 09 (FR)**

(56) Documents cités:
**EP-A1- 1 592 200 EP-A2- 1 638 291**
**CN-A- 103 051 439 US-A1- 2013 173 093**
**US-B1- 8 954 609**

## Description

La présente invention concerne un procédé de synchronisation d'un système. La présente invention se rapporte également à un contrôleur, un système et une installation ferroviaire associés.

L'invention s'applique au domaine ferroviaire, le procédé et le système étant destinés à une installation ferroviaire.

De façon classique, les installations ferroviaires comprennent des stations dotées de quais destinés, par exemple, à la descente et à la montée de passagers.

Il est connu de munir les quais de façades de quai, également appelées portes palières, et désignées par l'acronyme PSD de l'anglais « Platform Screen Doors ». Les façades de quai sont situées en bordure des voies et sont essentiellement destinées à empêcher des suicides ou des accidents de passagers.

Les façades de quai définissent une position d'ouverture et une position de fermeture. De telles façades de quai sont pilotées de façon automatique de sorte, par exemple, à n'être en position d'ouverture que lorsqu'un véhicule est stationné à un quai.

En outre, certaines installations ferroviaires sont dotées d'un système de contrôle automatique du trafic ferroviaire, également désigné par l'acronyme CBTC de l'anglais « Communication Based Train Control ». Il s'agit d'un système basé sur une communication entre des véhicules et des dispositifs en charge de la gestion du trafic.

Lorsque les quais sont dotés de façades de quai, le système CBTC assure l'articulation entre la position d'ouverture ou de fermeture des façades de quai et la circulation des véhicules. A titre d'illustration, un véhicule approchant d'un quai doté de façades de quai ne sera autorisé à entrer en station que si les façades de quai sont bien verrouillées en position de fermeture.

Un tel système CBTC est donc un système distribué devant donc garantir une bonne sécurité tout en permettant un temps de réponse le plus rapide possible.

Le document US 8 954 609 B1 décrit une opération de ajustement de base de temps en fonction du décalage entre une horloge d'un appareil maître et une horloge d'un appareil esclave. L'ajustement est modifié dans le cas d'une différence entre les valeurs "time-to-live" (TTL) des messages de l'appareil maître et de l'appareil esclave.

Il existe donc un besoin pour un procédé garantissant une bonne sécurité dans un système distribué tout en permettant un temps de réponse le plus rapide possible

L'invention est définie par les revendications indépendantes.

Les revendications dépendantes définissent des modes de réalisation particuliers.

D'autres caractéristiques et avantages de l'invention apparaîtront à la lecture de la description qui suit de modes de réalisation de l'invention, la description étant donnée à titre d'exemple uniquement et en référence aux dessins qui sont :

- figure 1, une représentation schématique d'une installation ferroviaire,
- figure 2, un ordinogramme d'un exemple de mode de fonctionnement de l'installation ferroviaire,
- figure 3, un ordinogramme d'un exemple de mise en oeuvre d'un autre exemple de procédé de synchronisation,
- figures 4 et 5, des ordinogrammes d'un exemple de mise en oeuvre d'un autre exemple de procédé de synchronisation, et
- figures 6 et 7, un ordinogramme d'un exemple de mise en oeuvre d'un autre exemple de procédé de synchronisation.

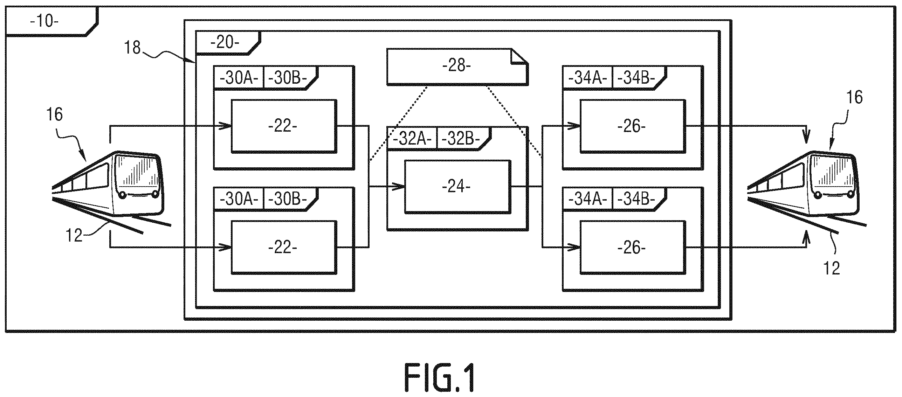

Une installation ferroviaire 10 est représentée schématiquement sur la figure 1.

L'installation ferroviaire 10 est, par exemple, une installation de transport ferroviaire urbain de type métro ou tramway.

L'installation ferroviaire 10 comprend des voies 12, au moins une station, au moins un véhicule 16 et un système de gestion 18.

Les voies 12 sont propres à assurer la circulation de véhicules 16.

Les stations définissent des lieux dans lesquels les véhicules 16 sont susceptibles de stationner.

Chaque station comprend au moins un quai.

Généralement, un véhicule 16 stationne à un quai d'une station pour permettre la circulation de passagers entre le véhicule 16 et le quai.

Au moins certains quais ont des façades de quai.

Les façades de quai sont généralement installées en bordure de voies 12 et sont, par exemple, formées par des portes et des façades séparant le quai des voies 12. Les façades et les portes sont, par exemple, vitrées et présentent une hauteur suffisante pour dissuader un individu de les enjamber.

Les façades de quai sont destinées à améliorer la sécurité, notamment en empêchant des usagers de se rendre sur les voies 12.

Il est défini une position de fermeture et une position d'ouverture pour les façades de quai.

Dans la position de fermeture, les portes sont fermées et verrouillées.

Dans la position d'ouverture, les portes sont ouvertes et/ou non verrouillées.

En outre, les façades de quai installées sur un quai comprennent un module de gestion de façades de quai, non représenté sur les figures.

Le module de gestion de façades de quai est adapté pour recevoir des signaux de commande et pour émettre au moins un signal d'état.

Dans l'exemple de la figure 1, les signaux de commande sont un signal d'ouverture et un signal de fermeture.

A la réception du signal d'ouverture, respectivement de fermeture, le module de gestion de façades de quai est adapté pour passer les façades de quai dans la position d'ouverture, respectivement de fermeture.

Le signal d'état est un signal indiquant que les portes des façades de quai sont verrouillées en position de fermeture.

Le véhicule 16 est adapté pour circuler sur les voies 12 et est, par exemple, un véhicule ferroviaire tel un métro ou un tramway.

Le système de gestion 18 est destiné à assurer la circulation d'un véhicule 16 dans l'installation ferroviaire 10 indépendamment de la présence ou non de façades de quai.

Le système de gestion 18 comprend au moins un contrôleur 20 installé dans chaque véhicule 16.

Le contrôleur 20 comporte des modules d'entrée 22, un calculateur 24 et des modules de sortie 26.

En variante, le contrôleur 20 comporte une pluralité de calculateurs 24.

Le système de gestion 18 comporte aussi une interface de communication 28.

L'interface de communication 28 est notamment propre à assurer une communication bidirectionnelle entre le contrôleur 20 d'une part et des équipements installés sur les quais d'autre part.

L'interface de communication 28 est aussi propre à assurer une communication entre chaque module d'entrée 22 et chaque module de sortie 26.

Par exemple, les communications entre le module de gestion des façades et le contrôleur 20 ou un élément du contrôleur 20 sont mises en oeuvre par voie radio via l'interface de communication 28 et les communications entre les modules d'entrée 22 et de sortie 26 sont mises en oeuvre par voie filaire.

Le contrôleur 20 est, par exemple, la partie embarquée d'un système CBTC.

Dans ce cas, le contrôleur est, par exemple, l'ATC embarqué, de l'anglais « Automatic Train Control ».

Le contrôleur 20 comprend une antenne et est adapté pour échanger par voie radio des messages avec le module de gestion des façades en utilisant l'interface de communication 28.

En outre, le contrôleur 20 comprend une mémoire comprenant des instructions logicielles et un processeur propre à exécuter au moins une partie des instructions.

En variante, le contrôleur 20 comporte une pluralité de mémoires et/ou une pluralité de processeurs, chaque mémoire comprenant des instructions logicielles et chaque processeur étant propre à exécuter au moins une partie des instructions.

Chaque module d'entrée 22 est propre à recevoir des données provenant d'au moins un capteur et à produire un signal d'entrée correspondant à au moins une partie des données reçues.

Chaque module d'entrée 22 comporte une pluralité de chaînes de traitement redondantes, la redondance assurant une sécurité du résultat obtenu.

Chaque chaîne de traitement du module d'entrée 22 comporte une première horloge locale 30A propre.

La première horloge locale 30A est propre à cadencer la chaîne de traitement. Cela signifie que chaque chaîne de traitement du module d'entrée 22 effectue ses opérations au rythme donné par sa première horloge locale 30A.

Chaque chaîne de traitement du module d'entrée 22 est ainsi propre à effectuer des opérations à un rythme basé sur des dates locales fournies par son horloge locale 30A.

Chaque chaîne de traitement du module d'entrée 22 comporte aussi une deuxième horloge locale 30B propre.

La deuxième horloge locale 30B est propre à dater les événements.

En ce sens, la deuxième horloge locale 30B est qualifiable d'horloge sécuritaire.

Selon un mode de réalisation, la deuxième horloge locale 30B est un composant physique dédié.

Selon un autre mode de réalisation, la deuxième horloge locale 30B est un simple compteur incrémenté par la première horloge locale 30A.

Le calculateur 24 comporte une pluralité de chaînes de traitement redondantes, la redondance assurant une sécurité du résultat obtenu.

Chaque chaîne de traitement du calculateur 24 comporte une première horloge locale 32A propre cadençant la chaîne de traitement respective.

Ainsi, chaque chaîne de traitement est ainsi propre à effectuer des opérations à un rythme basé sur des dates locales fournies par sa première horloge locale 32A.

Chaque chaîne de traitement du calculateur 24 comporte aussi une deuxième horloge locale 32B propre.

La deuxième horloge locale 32B est propre à dater les événements.

En ce sens, la deuxième horloge locale 32B est qualifiable d'horloge sécuritaire.

Selon un mode de réalisation, la deuxième horloge locale 32B est un composant physique dédié.

Selon un autre mode de réalisation, la deuxième horloge locale 32B est un simple compteur incrémenté par la première horloge locale 32A.

Chaque module de sortie 26 est propre à envoyer des ordres à un actionneur, ces ordres étant un signal de sortie.

Chaque module de sortie 26 comporte une pluralité de chaînes de traitement redondantes, la redondance assurant une sécurité du résultat obtenu.

Chaque chaîne de traitement du module de sortie 26 comporte une première horloge locale 34A propre.

La première horloge locale 34A est propre à cadencer les chaînes de traitement du module de sortie 26. Cela signifie que chaque chaîne de traitement du module de sortie 26 effectue ses opérations au rythme donné par sa première horloge locale 34A.

Chaque chaîne de traitement du module de sortie 26 est ainsi propre à effectuer des opérations à un rythme basé sur des dates locales fournies par sa première horloge locale 34A.

Chaque chaîne de traitement du module de sortie 26 comporte aussi une deuxième horloge locale 34B propre.

La deuxième horloge locale 34B est propre à dater les événements.

En ce sens, la deuxième horloge locale 34B est qualifiable d'horloge sécuritaire.

Selon un mode de réalisation, la deuxième horloge locale 34B est un composant physique dédié.

Selon un autre mode de réalisation, la deuxième horloge locale 34B est un simple compteur incrémenté par la première horloge locale 34A.

Sauf mention expresse :

- les horloges locales 30, 32 et 34 ne sont pas synchronisées entre elles.
- les premières horloges locales A (servant à cadencer) de l'ensemble des chaînes de traitement composant un module donné sont synchronisées par un procédé non décrit. Ainsi, à n'importe quel instant, les chaînes réalisent les mêmes traitements.
- les premières et deuxièmes horloges A et B d'une chaîne de traitement donnée sont synchronisées. Ainsi, l'horloge locale B (servant à dater) est mise à jour à la période des cycles.

Par horloge locale, dans ce contexte, il est entendu de manière indifférente la première horloge locale 30A, 32A, 34A ou la deuxième horloge locale 30B, 32B, 34B. Ainsi, l'horloge locale 30, 32 et 34 est propre à cadencer une chaîne de traitement et à dater des événements.

En outre, la résolution de chaque horloge 30, 32 et 34 est, par exemple, supérieure ou égale à 100 millisecondes.

Dans certains modes de réalisation, le système 18 comporte une horloge globale cadençant le système 18.

Le contrôleur 20 est propre à assurer une synchronisation entre ses différents éléments par la mise en oeuvre d'un procédé de synchronisation du système 18.

Avant de décrire en détail des modes de réalisation de procédé de synchronisation du système 18, il convient de décrire rapidement un mode de fonctionnement de l'installation ferroviaire 10 correspondant à l'état de la technique pour mieux mettre en évidence les avantages des modes de réalisation de procédé de synchronisation du système 18.

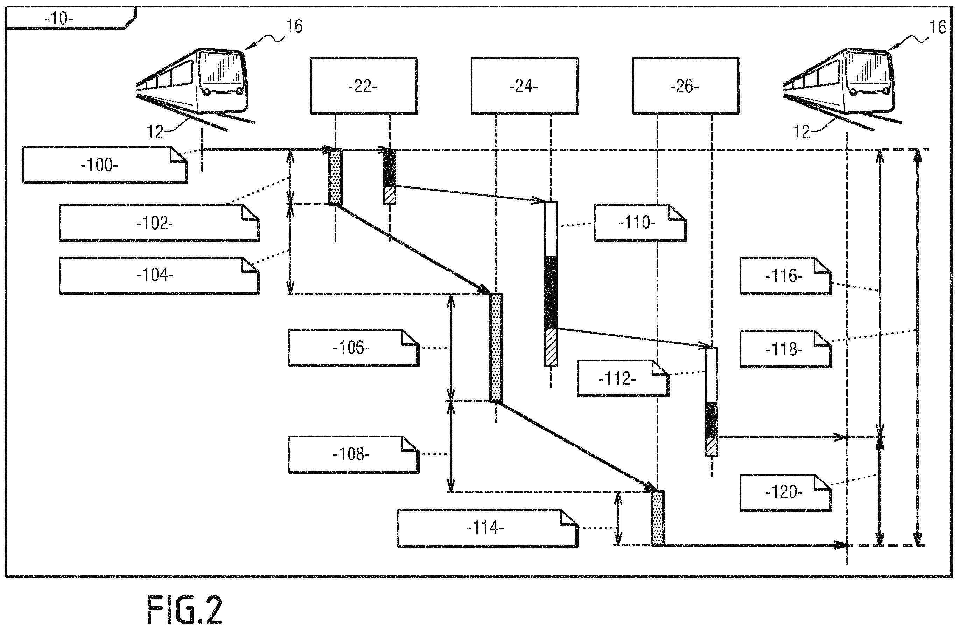

Le cas de la figure 2 est ainsi décrit dans ce qui suit.

Les cadres repérés par les signes de référence 100, 102, 104, 106, 108, 110, 112, 114, 116, 118 et 120 illustrent les éléments principaux de cet exemple de mise en oeuvre.

Plus précisément, le cadre 100 représente l'acquisition d'un signal commun ; le cadre 102 représente le pire cas de temps de réponse d'un module d'entrée 22 ; le cadre 104 représente le pire cas de latence dans la transmission de données entre un module d'entrée 22 et le calculateur 24 ; le cadre 106 représente le pire cas de temps de réponse du calculateur 24 : le cadre 108 représente le pire cas de latence dans la transmission de données entre le calculateur 24 et un module de sortie 26 ; les cadres 110 et 112 illustrent schématiquement l'asynchronisme ; le cadre 114 représente le pire cas de temps de réponse d'un module de sortie 26 ; le cadre 116 représente le temps de réponse réel du contrôleur 20 ; le cadre 120 représente la marge de sécurité, le cadre 118 correspondant au temps de réponse en sécurité du contrôleur 20, c'est-à-dire la somme du temps de réponse réel et de la marge de sécurité.

Ainsi, dans le mode de fonctionnement illustré par la figure 2, il apparaît que chaque élément du contrôleur 20 met en oeuvre son cycle en utilisant son horloge locale. Les cycles de chaque élément du contrôleur 20 s'exécutent donc de manière asynchrone. Le temps de réponse en sécurité du contrôleur 20 (c'est-à-dire pour lequel le fonctionnement de l'installation ferroviaire 10 est assuré) est la somme de quatre éléments qui sont :

- le temps de réponse réel du contrôleur 20, le temps de réponse dépendant notamment du temps de réponse des modules d'entrée 22, du temps de réponse du calculateur 24, du temps de réponse des modules de sortie 26, de la latence de l'interface de communication 28 et des asynchronismes entre ces différents éléments du contrôleur 20,
- la marge à prendre en compte correspondant à la somme des différences entre le temps de réponse réel et le temps de réponse pire cas d'un des modules d'entrée 22, du calculateur 24 et de l'un des modules de sortie 26,

- la marge due à la différence entre le temps de transmission réel et le temps de transmission pire cas entre un module d'entrée 22 et le calculateur 24, et entre le calculateur 24 et le module de sortie 26, et
- la marge due à la résolution des horloges 30, 32 ,34 utilisées pour garantir les temps de réponse pire cas et les temps de transmission pire cas

L'ensemble des modes de réalisation de procédé de synchronisation vise à réduire au moins l'un des quatre éléments précédents.

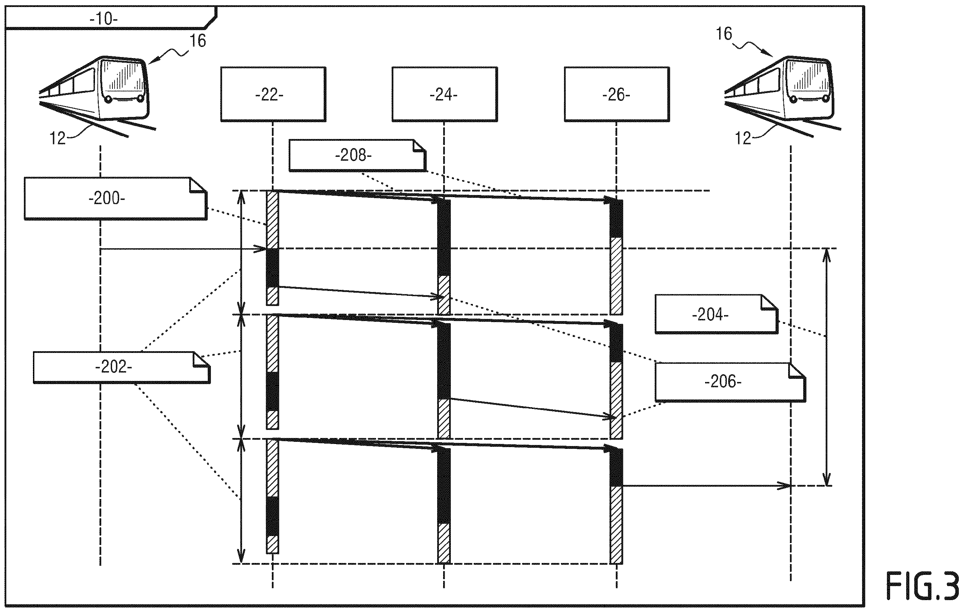

Un exemple de mise en oeuvre d'un procédé de synchronisation est à présent décrit en référence à la figure 3.

La figure 3 est un ordinogramme dans lequel les cadres repérés par les signes de référence 200, 202, 204, 206 et 208 illustrent les éléments principaux d'un premier exemple de mise en oeuvre d'un procédé de synchronisation.

Un tel procédé permet de réduire le temps de réponse réel du contrôleur 20 en supprimant l'asynchronisme entre les horloges locales 30, 32 et 34 en les synchronisant à l'horloge globale.

Le procédé de synchronisation comporte l'envoi d'un signal de synchronisation par un module dédié, faisant par exemple partie du contrôleur. Cet envoi est symbolisé par le cadre 208.

L'envoi est mis en oeuvre plusieurs fois de manière à assurer une forte redondance dans la réception du signal de synchronisation

Le signal de synchronisation se propage avec un temps de latence faible.

Selon l'exemple décrit, le signal de synchronisation comporte un identifiant.

Dès réception du signal de synchronisation ayant l'identifiant attendu, chaque élément du contrôleur 20 met en oeuvre les opérations à effectuer.

Pour garantir le fonctionnement synchrone du contrôleur 20, chaque élément du contrôleur 20 termine ses opérations et transmet les messages avant l'arrivée du signal de synchronisation suivant.

En cas d'indisponibilité du signal de synchronisation, l'élément du contrôleur 20 met en oeuvre les opérations à effectuer à une cadence plus lente que la cadence de l'horloge globale illustrée par le cadre 202. Cela permet que, dès que l'élément du contrôleur 20 est à nouveau capable de recevoir le signal de synchronisation, la synchronisation du système 18 soit aisée à mettre en oeuvre.

Dans un tel premier exemple, le procédé permet une synchronisation et une mise en oeuvre des opérations à effectuer par le système 18 qui soit plus rapide. Cela est mis en évidence par les cadres 204 et 206 qui montrent que l'asynchronisme est supprimé et que le temps réel de réponse est plus restreint que trois cycles.

En outre, le cadre 200 illustre un délai constant permettant d'optimiser le temps de réponse du système 18.

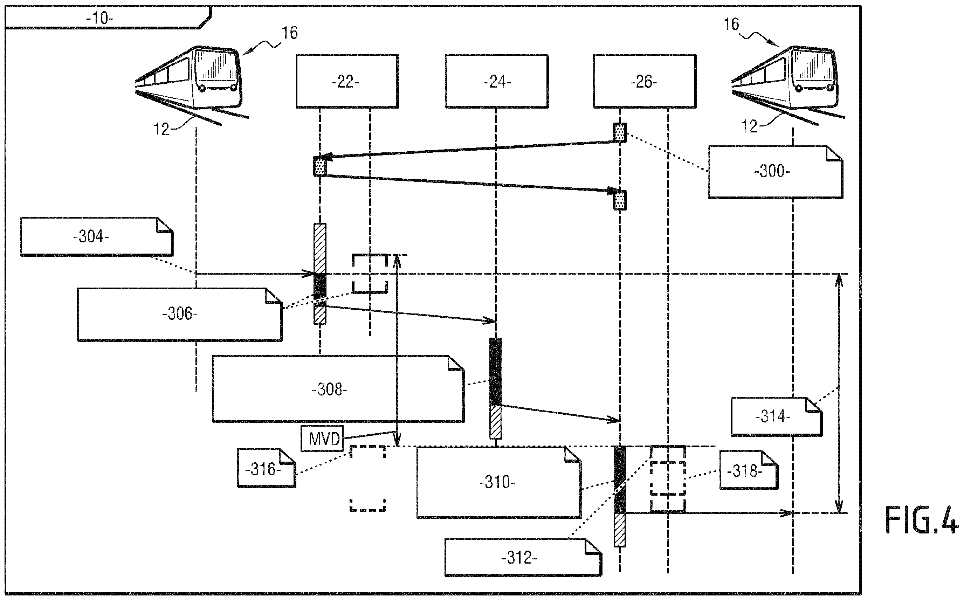

Un deuxième exemple de mise en oeuvre d'un procédé de synchronisation est à présent décrit en référence à la figure 4.

La figure 4 est un ordinogramme dans lequel les cadres repérés par les signes de référence 300, 302, 304, 306, 308, 310, 312, 314, 316 et 318 illustrent les éléments principaux d'un deuxième exemple de mise en oeuvre d'un procédé de synchronisation.

Il est à noter qu'apparaissent aussi les signes de référence MVD et des crochets, le signe de référence MVD renvoyant au terme anglais « Maximum Validity Duration » qui signifie « durée maximale de validité » et les crochets indiquant soit la valeur minimale sur la base locale de la deuxième horloge à un instant donnée, soit la valeur maximale sur la base locale de la deuxième horloge à un instant donnée.

Le procédé comporte, pour chaque signal d'entrée produit par chaque chaîne de traitement d'un module d'entrée 22, l'association d'une date d'entrée exprimée dans l'horloge locale de la chaîne de traitement du module d'entrée 22 ayant produit le signal (voir cadre 306).

Le procédé comporte aussi, la transmission de chaque signal d'entrée depuis un module d'entrée 22 vers le calculateur 24.

Comme illustré par le cadre 308, le procédé comporte également, la génération de signaux de sortie à destination d'un ou plusieurs modules de sortie 26.

Un signal de sortie est le résultat de l'application d'une première fonction $f_1$ spécifique au signal de sortie à au moins un signal d'entrée reçu.

Ainsi, la première fonction $f_1$ détermine la valeur du signal de sortie.

Par exemple, la première fonction $f_1$ est une opération logique appliquée à une pluralité de signaux d'entrée reçus. L'opération « AND » ou l'opération « OR » sont des cas particuliers d'opération logique.

Dans le cas où un seul signal d'entrée reçu est impliqué dans la première fonction $f_1$, un autre signal distinct d'un signal d'entrée reçu peut être impliqué dans le calcul du signal de sortie. Typiquement, un signal correspondant à un autre signal d'entrée reçu mais déphasé d'une valeur connue peut être utilisé. Les opérations logiques précédentes sont alors appliquées au signal d'entrée reçu et au signal correspondant à un autre signal d'entrée reçu mais déphasé d'une valeur connue.

Le procédé comprend aussi, pour chaque signal de sortie, le calcul d'une durée de fin de validité du signal de sortie par utilisation d'une deuxième fonction $f_2$ (voir cadre 316).

La deuxième fonction $f_2$ est déduite de la première fonction $f_1$ spécifique au signal de sortie et appliquée sur les dates d'entrée locale associées à chaque signal d'entrée reçu sur lequel la première fonction spécifique $f_1$ a été appliquée.

Dans ce cas, la deuxième fonction $f_2$ permet de déterminer la validité temporelle du signal de sortie calculé par la première fonction $f_1$. La validité temporelle est exprimée sous forme d'une date de fin de validité.

Selon un cas particulier, la deuxième fonction $f_2$ est une opération ensembliste appliquée aux dates.

Pour un cas à deux signaux dont la date d'acquisition est respectivement d1 et d2, les opérations suivantes sont envisageables pour la deuxième fonction $f_2$ :

- union (d1, d2) ;
- intersection (d1, d2) ;
- min (d1, d2) ;
- max (d1, d2), et
- d2+durée prédéfinie.

A titre d'illustration particulier, il est acquis un premier signal d'entrée binaire E1 et un deuxième signal d'entrée binaire E2.

Le signal de sortie binaire notée S est calculée par application de la première fonction $f_1$ de sorte que S = E1 AND E2, la première fonction $f_1$ est alors l'opération logique qui associe à deux grandeurs binaires A et B la valeur de A AND B.

Par ailleurs, pour ce signal de sortie, il est effectué le calcul d'une durée de fin de validité du signal de sortie par utilisation d'une deuxième fonction $f_2$.

Dans ce cas particulier, la deuxième fonction $f_2$ s'exprime comme suit :

$$f_2 = \text{min (date d'acquisition de E1, date d'acquisition de E2)} + 100 \text{ ms.}$$

Le procédé comprend aussi la transmission de chaque signal de sortie depuis le calculateur 24 vers le module de sortie 26.

Le procédé comprend également l'estimation par chaque chaîne de traitement de chaque module de sortie 26, du décalage entre l'horloge locale 34 de la chaîne de traitement du module de sortie 26 et l'horloge locale 30 d'au moins un module d'entrée 22.

En outre, l'estimation des décalages est mise à jour périodiquement, et extrapolée entre deux mises à jour.

L'estimation est, par exemple, mise en oeuvre par une synchronisation entre le module de sortie 26 et au moins un module d'entrée 22 (voir cadre 300). Par exemple, le module de sortie 26 envoie un signal contenant la date d'envoi selon son horloge locale 34 pour connaître l'heure locale de l'horloge locale 30 du module d'entrée 22. Le module d'entrée 22 envoie à son tour un signal contenant entre autres la date de réception selon son horloge locale du signal précédemment émis par le module de sortie 26. Le décalage correspond à la différence entre la date de réception par le module d'entrée 22 du signal envoyé par le module de sortie 26 et la date d'envoi par le module de sortie 26 du signal envoyé vers le module d'entrée 22, compensée par la durée de transmission pire cas du signal émis par le module de sortie 26.

Autrement formulé, les modules de sortie 26 estiment le décalage entre leur base de temps locale et la base temporelle de chaque module d'entrée 22. Cette opération requiert d'assurer un pire cas de temps de transmission entre le module d'entrée 22 et le module de sortie 26.

Comme montré schématiquement par les cadres 300, 310, 312, 316 et 318 le procédé comporte alors, pour chaque durée de fin de validité du signal de sortie une opération de changement de base de temps depuis l'horloge du module d'entrée 22 (voir plus spécifiquement le cadre 316) vers l'horloge du module de sortie 26 (voir cadre 318), dont le résultat est avantageusement compensé d'une marge de sécurité par le module de sortie 26 (voir cadre 312).

Dans l'exemple illustré, la marge de sécurité est le pire cas de décalage obtenu à l'étape d'estimation. La marge de sécurité est alors propre à chaque module de sortie 26.

Selon un autre mode de réalisation, la marge de sécurité est inférieure ou égale à la durée de transmission la plus longue d'une donnée entre un module d'entrée 22 et un module de sortie 26.

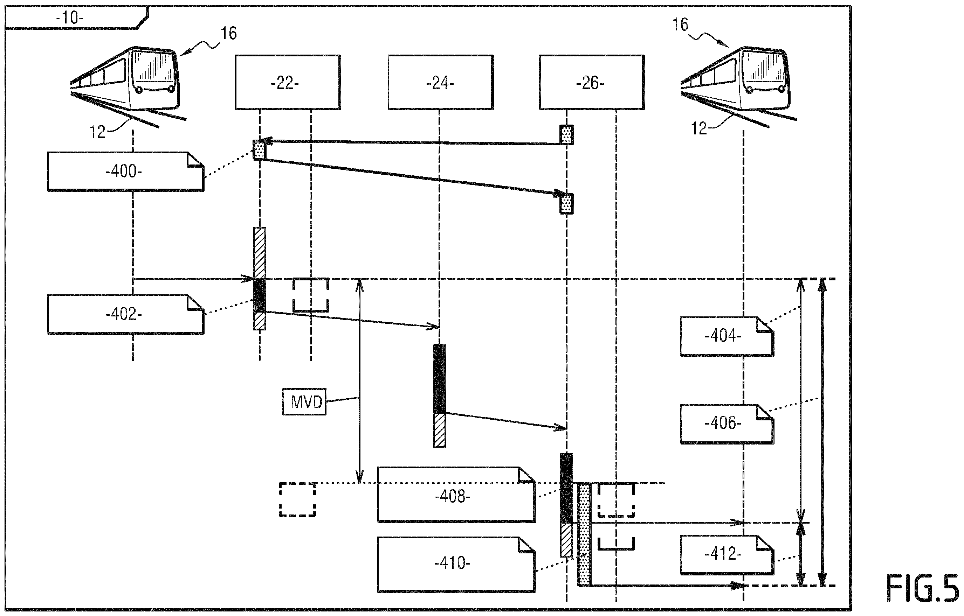

Comme le montre schématiquement la figure 5 correspondant au pire scénario, la marges de sécurité liée aux temps de transmission entre un module d'entrée 22 et le calculateur 24 et de transmission entre le calculateur 24 et le module de sortie 26 est réduite.

Dans la figure 5, le cadre dont le numéro de référence est 400 correspond à un temps de transfert dégradé ; le cadre 402 à une acquisition dégradée, le cadre 408 à l'arrêt du rafraichissement des données lorsque le temps de fin de validité du signal de sortie a expiré ; le cadre 410 au pire cas de latence du module de sortie 26 ; le cadre 404 le temps de réponse réel du contrôleur 20 ; le cadre 412 représente la marge de sécurité, le cadre 406 correspondant au temps de réponse en sécurité du contrôleur 20, c'est-à-dire la somme du temps de réponse réel et de la marge de sécurité.

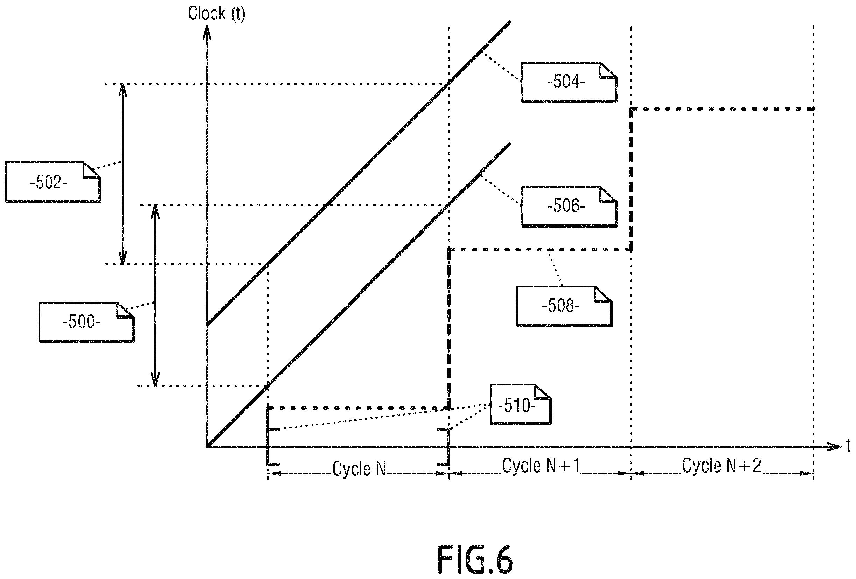

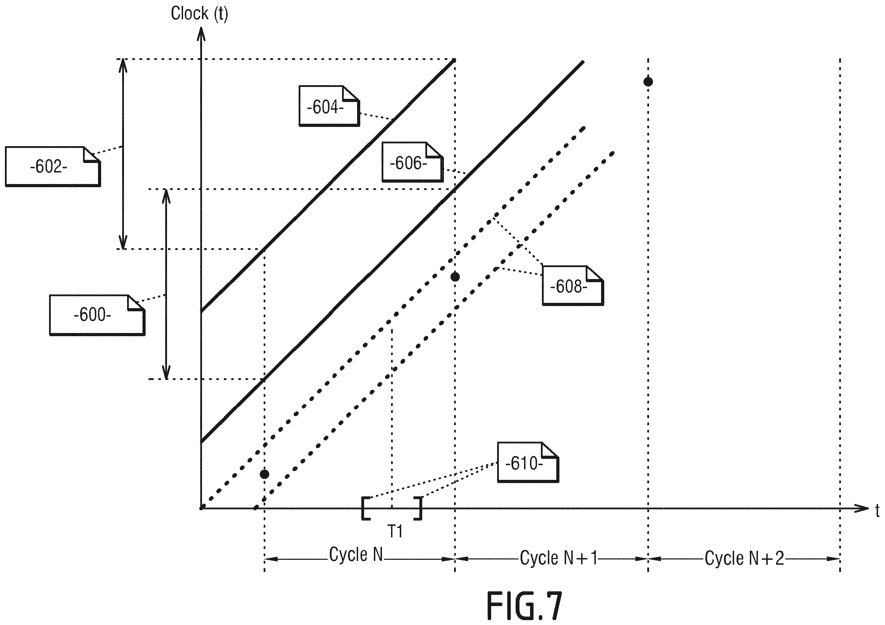

Un troisième exemple de mise en oeuvre d'un procédé de synchronisation est à présent décrit en référence aux figures 6 et 7.

Le procédé supprime la synchronisation des horloges locales A et B d'une chaîne de traitement donnée. L'horloge servant à cadencer A est mise à jour à la période du cycle de la chaîne de traitement. L'horloge servant à dater est mise à jour à une période bien inférieure, celle-ci n'étant plus contrainte par la durée des traitements à réaliser à chaque cycle.

Le procédé définit une horloge supplémentaire sur chaque chaîne de traitement de chaque module, appelée horloge du module.

Selon un mode de réalisation, l'horloge du module est un composant physique dédié. Selon un autre mode de réalisation, l'horloge du module est un simple compteur incrémenté par l'horloge locale B.

Le procédé de synchronisation comporte la fourniture d'un premier instant par l'horloge globale pour chaque chaîne de traitement.

En variante, la fourniture du premier instant est effectuée par une des chaînes de traitement.

Dans l'exemple représenté, il n'est considéré que deux chaînes de traitement. Les horloges locales de chaque chaîne du module considéré sont illustrées respectivement par le cadre 504 et le cadre 506.

Le procédé comporte aussi la conversion du premier instant en premier instant local pour chaque chaîne de traitement.

Le procédé comprend également la mise en oeuvre de la même série d'opérations sur les mêmes données d'entrées sur chaque chaîne de traitement à partir du premier instant local.

Il est ensuite incrémenté l'horloge locale B propre de chaque chaîne de traitement tant que la série d'opérations est mise en oeuvre, pour obtenir un deuxième instant local.

Le procédé comporte alors le calcul de l'intervalle de temps local défini comme la différence entre le deuxième instant local et le premier instant local.

Les deux intervalles de temps locaux ainsi obtenus sont représentés respectivement par le cadre 500 et le cadre 502.

Il est ensuite mis en oeuvre la comparaison des intervalles de temps locaux calculés pour déterminer un intervalle de temps local commun à une majorité de chaîne de traitement.

Selon un mode de réalisation, la comparaison est mise en oeuvre par un mécanisme de vote.

En variante, l'intervalle de temps local commun est le maximum des intervalles de temps locaux.

Selon un autre mode de réalisation, l'intervalle de temps local commun est le minimum des intervalles de temps locaux.

Selon une variante, l'intervalle de temps local commun est la médiane des intervalles de temps locaux.

Selon un autre cas particulier, l'intervalle de temps local commun est la moyenne, notamment la moyenne arithmétique, des intervalles de temps locaux.

Chaque chaîne de traitement incrémente son horloge du module d'une quantité égale à l'intervalle de temps local commun déterminé précédemment. L'horloge du module est ainsi synchronisée sur les deux chaînes de traitement. L'horloge du module résultante est représentée par le cadre 508.

L'horloge du module est utilisée par chaque chaîne de traitement pour dater les événements.

Dans ce cas, il apparaît bien que l'erreur temporelle d'attribution d'une date à n'importe quel instant T1 est fonction de la période entre deux instants d'incrémentation de l'horloge du module 510.

Un tel procédé permet de réduire la marge due à la résolution de l'horloge globale puisque le procédé proposé ne fait pas appel à l'horloge globale pour dater un instant pour toutes les deuxièmes horloges locales 30B, 32B et 34B, la période entre 2 instants d'incrémentation de l'horloge du module pouvant être inférieure à la période de l'horloge globale

Selon un autre mode de réalisation illustrée par la figure 7 (voir notamment cadres 600, 602, 604, 606, 608, 610), le procédé comporte, en plus du procédé décrit précédemment, un calcul d'estimation de l'horloge du module entre les deux instants de mise à jour de l'horloge du module.

Entre ces deux instants, à tout instant, chaque chaîne incrémente son horloge de module.

A tout instant, chaque chaîne de traitement peut estimer la valeur minimum de l'horloge du module, par exemple en soustrayant à la valeur courante de l'horloge du module, une marge de sécurité. De même, chaque chaîne de traitement peut estimer la valeur maximum de l'horloge du module en ajoutant à la valeur courante de l'horloge du module, une seconde marge de sécurité. L'horloge du module résultante est représentée par le cadre 608.

Formulé autrement, le procédé comporte la fourniture d'une première marge de temps. Il est à noter que cette marge est soit une constante, soit calculée en fonction de la durée écoulée entre l'instant de l'opération considérée, et le temps écoulée depuis la dernière resynchronisation des horloges du module. Le procédé comprend également la fourniture d'un instant local correspondant à l'exécution de la même opération sur chacune des chaînes de traitement du module considéré, la datation dudit instant local dans l'horloge du module de chaque chaîne de traitement du module considéré, et la fixation d'un minorant de l'ensemble des horloges du module à l'instant d'exécution de l'opération considérée comme étant le minimum des datations locales auquel la première marge de temps est soustraite.

Selon un autre mode de réalisation ou en complément, le procédé comporte la fourniture d'une deuxième marge de temps, la fourniture d'un instant local correspondant à l'exécution de la même opération sur chacune des chaînes de traitement du module considéré, la datation dudit instant local dans l'horloge du module de chaque chaîne de traitement du module considéré, et la fixation d'un majorant de l'ensemble des horloges du module à l'instant d'exécution de l'opération considérée comme étant le maximum des datations locales auquel la deuxième marge de temps est additionnée.

Les marges de sécurité sont calculées en fonction de la précision des instants locaux sur chacune des chaînes et de la résolution de l'horloge locale.

Dans ce cas, il apparaît bien que l'erreur temporelle d'attribution d'une date à n'importe quel instant est une fonction de la résolution de l'horloge locale de chaque chaîne et des performances de synchronisation entre chaque chaîne (voir cadre 610).

L'ensemble des modes de réalisation de procédé de synchronisation proposé permettent donc de réduire au moins l'un parmi le temps de réponse réel du contrôleur 20, la marge liée au temps de réponse du contrôleur, la marge due aux temps de transmission et la marge due à la résolution de l'horloge globale.

En combinant les modes de réalisation, lorsque cela est techniquement possible, de nouveaux modes de réalisation du procédé de synchronisation sont obtenus, ces nouveaux modes présentant des performances améliorées en termes de rapidité tout en garantissant une réponse du système 18 remplissant les critères de sécurité.

Par ailleurs, le système 18 proposé s'applique pour d'autres domaines de l'automatisation pour les systèmes distribués, pourvu que soit présent un contrôleur présentant des caractéristiques similaires au contrôleur 20 précédemment décrit.

**Revendications**

1. Procédé de synchronisation d'un système (18) comportant une pluralité de modules d'entrée (22), un calculateur (24) et une pluralité de modules de sortie (26), comportant chacun une pluralité de chaînes de traitement redondantes, chaque chaîne de traitement comportant une horloge locale (30, 32, 34) propre cadençant la chaîne de traitement respective, le procédé comportant :

   - pour chaque chaîne de traitement du module d'entrée (22), pour chaque signal d'entrée produit, l'association d'une date d'entrée locale au signal d'entrée par le module d'entrée (22) ayant produit le signal,
   - la transmission de chaque signal d'entrée depuis le module d'entrée (22) vers le calculateur (24),
   - pour chaque chaîne de traitement du calculateur (24), la génération de signaux de sortie à destination d'un ou plusieurs modules de sortie (26), un signal de sortie étant le résultat de l'application d'une première fonction spécifique au signal de sortie à au moins un signal d'entrée reçu,
   - pour chaque signal de sortie, le calcul d'une durée de fin de validité du signal de sortie par utilisation d'une deuxième fonction, la deuxième fonction étant déduite de la première fonction spécifique au signal de sortie et appliquée sur les dates d'entrée locale associées à chaque signal d'entrée reçu sur lequel la première fonction spécifique a été appliquée,
   - la transmission de chaque signal de sortie depuis le calculateur (24) vers le module de sortie respectif (26), et
   - pour chaque durée de fin de validité du signal de sortie, une opération de changement de base de temps depuis l'horloge locale du module d'entrée (22) vers l'horloge locale du module de sortie (26) réalisée par le module de sortie (26),
   - l'estimation par chaque module de sortie (26) de chaque décalage entre l'horloge locale (34) du module de sortie (26) et l'horloge locale (30) du module d'entrée (22), l'estimation étant mise en oeuvre par une synchronisation entre le module de sortie (26) et le module d'entrée (22), le module de sortie (26) envoyant au module d'entrée (22) un signal contenant une date d'envoi selon son horloge locale et ledit module d'entrée (22) envoyant à son tour un signal contenant la date de réception selon son horloge locale du signal émis par le module de sortie (26), le décalage correspondant à la différence entre la date de réception par le module d'entrée (22) du signal envoyé par le module de sortie (26) et la date d'envoi par le module de sortie (26) du signal envoyé vers le module d'entrée (22), compensée par la durée de transmission pire cas du signal émis par le module de sortie (26),

   l'opération de changement de base de temps étant fonction du décalage estimé.

**2.** Procédé selon la revendication 1, dans lequel l'opération de changement de base de temps est compensée d'une marge de sécurité.

**3.** Procédé selon la revendication 2, dans lequel la marge de sécurité est inférieure ou égale à la durée de transmission la plus longue d'une donnée entre un module d'entrée (22) et un module de sortie (26).

**4.** Procédé selon la revendication 2 ou 3, dans lequel la marge de sécurité est fonction du décalage le plus grand.

**5.** Contrôleur (20) comportant une pluralité de modules d'entrée (22), un calculateur (24) et une pluralité de modules de sortie (26), comportant chacun une pluralité de chaînes de traitement redondantes, chaque chaîne de traitement comportant une horloge locale (30, 32, 34) propre cadençant la chaîne de traitement respective, le contrôleur (20) étant adapté pour mettre en oeuvre un procédé de synchronisation, le procédé comprenant :

- pour chaque chaîne de traitement du module d'entrée (22), pour chaque signal d'entrée produit, l'association d'une date d'entrée locale au signal d'entrée par le module d'entrée (22) ayant produit le signal,
- la transmission de chaque signal d'entrée depuis le module d'entrée (22) vers le calculateur (24),
- pour chaque chaîne de traitement du calculateur (24), la génération de signaux de sortie à destination d'un ou plusieurs modules de sortie (26), un signal de sortie étant le résultat de l'application d'une première fonction spécifique au signal de sortie à au moins un signal d'entrée reçu,
- pour chaque signal de sortie, le calcul d'une durée de fin de validité du signal de sortie par utilisation d'une deuxième fonction, la deuxième fonction étant déduite de la première fonction spécifique au signal de sortie et appliquée sur les dates d'entrée locale associées à chaque signal d'entrée reçu sur lequel la première fonction spécifique a été appliquée,
- la transmission de chaque signal de sortie depuis le calculateur (24) vers le module de sortie respectif (26), et
- pour chaque durée de fin de validité du signal de sortie, une opération de changement de base de temps depuis l'horloge du module d'entrée (22) vers l'horloge du module de sortie (26) réalisée par le module de sortie (26),
- l'estimation par chaque module de sortie (26) de chaque décalage entre l'horloge locale (34) du module de sortie (26) et l'horloge locale (30) du module d'entrée (22), l'estimation étant mise en oeuvre par une synchronisation entre le module de sortie (26) et le module d'entrée (22), le module de sortie (26) envoyant au module d'entrée (22) un signal contenant une date d'envoi selon son horloge locale et ledit module d'entrée (22) envoyant à son tour un signal contenant la date de réception selon son horloge locale du signal émis par le module de sortie (26), le décalage correspondant à la différence entre la date de réception par le module d'entrée (22) du signal envoyé par le module de sortie (26) et la date d'envoi par le module de sortie (26) du signal envoyé vers le module d'entrée (22), compensée par la durée de transmission pire cas du signal émis par le module de sortie (26),

l'opération de changement de base de temps étant fonction du décalage estimé.

**6.** Système comportant un contrôleur (20) selon la revendication 5.

**7.** Système selon la revendication 6, dans lequel le système (18) est un système de gestion de la circulation d'au moins un véhicule (16) dans une installation ferroviaire (10), l'installation ferroviaire (10) comprenant des voies (12), au moins un véhicule (16) adapté pour circuler sur les voies (12) et au moins une station, le contrôleur (20) étant propre à assurer l'arrivée du véhicule (16) à chaque station et le départ du véhicule (16) à chaque station.

**8.** Système selon la revendication 7, dans lequel le contrôleur (20) est installé à bord du véhicule (16).

**9.** Installation ferroviaire (10) comprenant :

- des voies (12),
- au moins un véhicule (16) adapté pour circuler sur les voies (12), et
- au moins un système (18) selon l'une quelconque des revendications 6 à 8.

**Patentansprüche**

**1.** Verfahren zur Synchronisierung eines Systems (18) mit einer Vielzahl von Eingangsmodulen (22), einem Rechner (24) und einer Vielzahl von Ausgangsmodulen (26), die jeweils eine Vielzahl von redundanten Verarbeitungsketten aufweisen, wobei jede Verarbeitungskette einen eigenen lokalen Taktgeber (30, 32, 34) aufweist, der die jeweilige Verarbeitungskette taktet, wobei das Verfahren umfasst:

- für jede Verarbeitungskette des Eingangsmoduls (22), für jedes erzeugte Eingangssignal, die Zuordnung eines lokalen Eingangsdatums zu dem Eingangssignal durch das Eingangsmodul (22), das das Signal erzeugt hat,
- die Übertragung jedes Eingangssignals von dem Eingangsmodul (22) an den Rechner (24),
- für jede Verarbeitungskette des Rechners (24), die Erzeugung von Ausgangssignalen für ein oder mehrere Ausgangsmodule (26), wobei ein Ausgangssignal das Ergebnis der Anwendung einer ersten ausgangssignalspezifischen Funktion auf mindestens ein empfangenes Eingangssignal ist,
- für jedes Ausgangsignal, die Berechnung einer Endgeltungsdauer des Ausgangsignals durch Verwendung einer zweiten Funktion, wobei die zweite Funktion von der ersten ausgangsignalspezifischen Funktion abgeleitet ist und auf die lokalen Eingangsdaten angewendet wird, die jedem empfangenen Eingangssignal zugeordnet sind, auf das die erste spezifische Funktion angewendet wurde,
- die Übertragung jedes Ausgangsignals von dem Rechner (24) an das jeweilige Ausgangmodul (26), und
- für jede Endgeltungsdauer des Ausgangsignals eine vom Ausgangmodul (26) durchgeführte Operation zur Änderung der Zeitbasis vom lokalen Taktgeber des Eingangsmoduls (22) zum lokalen Taktgeber des Ausgangmoduls (26),
- das Schätzen durch jedes Ausgangsmodul (26) jeder Abweichung zwischen dem lokalen Taktgeber (34) des Ausgangsmoduls (26) und dem lokalen Taktgeber (30) des Eingangsmoduls (22), wobei die Schätzung durch eine Synchronisierung zwischen dem Ausgangsmodul (26) und dem Eingangsmodul (22) durchgeführt wird, wobei das Ausgangsmodul (26) an das Eingangsmodul (22) ein Signal schickt, das ein Versanddatum gemäß seinem lokalen Taktgeber enthält und das Eingangsmodul (22) seinerseits ein Signal schickt, das das Empfangsdatum des von dem Ausgangsmodul (26) gesendeten Signals gemäß seinem lokalen Taktgeber enthält, wobei die Abweichung der Differenz zwischen dem Empfangsdatum des durch das Ausgangsmodul (26) gesendeten Signals durch das Eingangsmodul (22) und dem Versanddatum des an das Eingangsmodul (22) gesendeten Signals durch das Ausgangsmodul (26) entspricht, die durch die Worst-Case-Übertragungsdauer des durch das Ausgangsmodul (26) gesendeten Signals kompensiert wird,

wobei die Operation der Zeitbasisänderung von der geschätzten Abweichung abhängt.

2. Verfahren nach Anspruch 1, wobei die Operation der Zeitbasisänderung mit einer Sicherheitsmarge kompensiert wird.

3. Verfahren nach Anspruch 2, wobei die Sicherheitsmarge kleiner oder gleich der längsten Übertragungsdauer einer Angabe zwischen einem Eingangsmodul (22) und einem Ausgangmodul (26) ist.

4. Verfahren nach Anspruch 2 oder 3, wobei die Sicherheitsmarge von der größten Abweichung abhängt.

5. Controller (20) mit einer Vielzahl von Eingangsmodulen (22), einem Rechner (24) und einer Vielzahl von Ausgangsmodulen (26), die jeweils eine Vielzahl von redundanten Verarbeitungsketten aufweisen, wobei jede Verarbeitungskette einen eigenen lokalen Taktgeber (30, 32, 34) aufweist, der die jeweilige Verarbeitungskette taktet, wobei der Controller (20) zur Durchführung eines Synchronisierungsverfahrens geeignet ist, wobei das Verfahren umfasst:

- für jede Verarbeitungskette des Eingangsmoduls (22), für jedes erzeugte Eingangssignal, die Zuordnung eines lokalen Eingangsdatums zu dem Eingangssignal durch das Eingangsmodul (22), das das Signal erzeugt hat,
- die Übertragung jedes Eingangssignals von dem Eingangsmodul (22) an den Rechner (24),
- für jede Verarbeitungskette des Rechners (24), die Erzeugung von Ausgangssignalen für ein oder mehrere Ausgangsmodule (26), wobei ein Ausgangssignal das Ergebnis der Anwendung einer ersten ausgangssignalspezifischen Funktion auf mindestens ein empfangenes Eingangssignal ist,
- für jedes Ausgangsignal, die Berechnung einer Endgeltungsdauer des Ausgangsignals durch Verwendung einer zweiten Funktion, wobei die zweite Funktion von der ersten ausgangsignalspezifischen Funktion abgeleitet ist und auf die lokalen Eingangsdaten angewendet wird, die jedem empfangenen Eingangssignal zugeordnet sind, auf das die erste spezifische Funktion angewendet wurde,
- die Übertragung jedes Ausgangsignals von dem Rechner (24) an das jeweilige Ausgangmodul (26), und
- für jede Endgeltungsdauer des Ausgangsignals eine vom Ausgangmodul (26) durchgeführte Operation zur Änderung der Zeitbasis vom Taktgeber des Eingangsmoduls (22) zum Taktgeber des Ausgangmoduls (26),
- das Schätzen durch jedes Ausgangsmodul (26) jeder Abweichung zwischen dem lokalen Taktgeber (34) des Ausgangsmoduls (26) und dem lokalen Taktgeber (30) des Eingangsmoduls (22), wobei die Schätzung durch eine Synchronisierung zwischen dem Ausgangsmodul (26) und dem Eingangsmodul (22) durchgeführt wird, wobei das Ausgangsmodul (26) an das Eingangsmodul (22) ein Signal schickt, das ein Versanddatum gemäß seinem lokalen Taktgeber enthält und das Eingangsmodul (22) seinerseits ein Signal schickt, das das Empfangsdatum des von dem Ausgangsmodul (26) gesendeten Signals gemäß seinem lokalen Taktgeber enthält, wobei die Abweichung der Differenz zwischen dem Empfangsdatum des durch das Ausgangsmodul (26) gesendeten Signals durch das Eingangsmodul (22) und dem Versanddatum des an das Eingangsmodul (22) gesendeten Signals durch das Ausgangsmodul (26) entspricht, die durch die Worst-Case-Übertragungsdauer des durch das Ausgangsmodul (26) gesendeten Signals kompensiert wird,

wobei die Operation der Zeitbasisänderung von der geschätzten Abweichung abhängt.

6. System, aufweisend einen Controller (20) nach Anspruch 5.

7. System nach Anspruch 6, wobei das System (18) ein System zur Steuerung des Verkehrs von mindestens einem Fahrzeug (16) in einer Eisenbahnanlage (10) ist, wobei die Eisenbahnanlage (10) Gleise (12), mindestens ein Fahrzeug (16), das zum Fahren auf den Gleisen (12) geeignet ist, und mindestens eine Station umfasst, wobei der Controller (20) geeignet ist, die Ankunft des Fahrzeugs (16) an jeder Station und die Abfahrt des Fahrzeugs (16) an jeder Station zu gewährleisten.

8. System nach Anspruch 7, wobei der Controller (20) an Bord des Fahrzeugs (16) installiert ist.

9. Eisenbahnanlage (10), umfassend:

   - Gleise (12),
   - mindestens ein Fahrzeug (16), das zum Fahren auf den Gleisen (12) geeignet ist, und
   - mindestens ein System (18) nach einem der Ansprüche 6 bis 8.

## Claims

1. A method for synchronizing a system (18) including a plurality of input modules (22), a computer (24) and a plurality of output modules (26), each including a plurality of redundant processing chains, each processing chain including a specific local clock (30, 32, 34) pacing the respective processing chain, the method including:

   - for each processing chain of the input module (22), for each produced input signal, associating a local input date with the input signal via the input module (22) having produced the signal,
   - sending each input signal from the input module (22) to the computer (24),
   - for each processing chain of the computer (24), generating output signals intended for one or several output modules (26), an output signal being the result of the application of a first function specific to the output signal to at least one received input signal,
   - for each output cycle, calculating an expiry duration of the output signal by using a second function, the second function being deduced from the first function specific to the output signal and applied on the local input dates associated with each received input signal on which the first specific function has been applied,
   - sending each output signal from the computer (24) to the respective output module (26),
   - for each expiry duration of the output signal, an operation to change the time base from the clock of the input module (22) to the clock of the output module (26) done by the output module (26),
   - estimating, via each output module (26), each offset between the local clock of the output module (26) and the local clock of the input module (22),
   the estimating being done by synchronization between the output module (26) and the input module (22), the output module (26) sending to the input module (22) a signal containing the sending date according to its local clock and said input module (22) in turn sending a signal containing the reception date according to its local clock of the signal previously sent by the output module (26), the offset corresponding to the difference between the reception date by the input module (22) of the signal sent by the output module (26) and the sending date by the output module (26) of the signal sent to the input module (22), compensated by the worst-case transmission duration of the signal sent by the output module (26),
   the operation to change the time base being a function of the estimated offset.

**2.** The method according to claim 1, wherein the operation to change the time base is compensated by a safety margin.

**3.** The method according to claim 2, wherein the safety margin is less than or equal to the longest transmission duration of a datum between an input module (22) and an output module (26).

**4.** The method according to claim 2 or 3, wherein the safety margin is a function of the largest offset.

**5.** A controller (20) including a plurality of input modules (22), a computer (24) and a plurality of output modules (26), each including a plurality of redundant processing chains, each processing chain including a specific local clock (30, 32, 34) pacing the respective processing chain, the controller (20) being suitable for carrying out a synchronization method, the method comprising:

- for each processing chain of the input module (22), for each produced input signal, associating a local input date with the input signal via the input module (22) having produced the signal,
- sending each input signal from the input module (22) to the computer (24),
- for each processing chain of the computer (24), generating output signals intended for one or several output modules (26), an output signal being the result of the application of a first function specific to the output signal to at least one received input signal,
- for each output cycle, calculating an expiry duration of the output signal by using a second function, the second function being deduced from the first function specific to the output signal and applied on the local input dates associated with each received input signal on which the first specific function has been applied,
- sending each output signal from the computer (24) to the output module (26), and
- for each expiry duration of the output signal, an operation to change the time base from the clock of the input module (22) to the clock of the output module (26) done by the output module (26),
- estimating, via each output module (26), each offset between the local clock of the output module (26) and the local clock of the input module (22),

the estimating being done by synchronization between the output module (26) and the input module (22), the output module (26) sending to the input module (22) a signal containing the sending date according to its local clock and said input module (22) in turn sending a signal containing the reception date according to its local clock of the signal previously sent by the output module (26), the offset corresponding to the difference between the reception date by the input module (22) of the signal sent by the output module (26) and the sending date by the output module (26) of the signal sent to the input module (22), compensated by the worst-case transmission duration of the signal sent by the output module (26),

the operation to change the time base being a function of the estimated offset.

**6.** A system including a controller (20) according to claim 5.

**7.** The system according to claim 6, wherein the system (18) is a system for managing the movement of at least one vehicle (16) in a railway installation (10), the railway installation (10) comprising tracks (12), at least one vehicle (16) suitable for moving on the tracks (12) and at least one station, the controller (20) being able to ensure the arrival of the vehicle (16) at each station and the departure of the vehicle (16) from each station.

**8.** The system according to claim 7, wherein the controller (20) is installed on board the vehicle (16).

**9.** A railway installation (10), comprising:

- tracks (12),
- at least one vehicle (16) suitable for moving on the tracks (12), and
- at least one system (18) according to any one of claims 6 to 8.

FIG.1

FIG.2

FIG.3

FIG.4

FIG.5

FIG.6

EP 3 296 834 B1

FIG.7

**EP 3 296 834 B1**

## RÉFÉRENCES CITÉES DANS LA DESCRIPTION

**Documents brevets cités dans la description**

- US 8954609 B1